# EUROPEAN PATENT APPLICATION

(11) **EP 4 618 566 A1**
(43) Date of publication of application: **17.09.2025**
(21) Application number: 23888137.9
(22) Date of filing: 10.11.2023
(51) Int. Cl.: H04N 21/4788

(54) **VIDEO INTERACTION METHOD AND APPARATUS, AND DEVICE AND STORAGE MEDIUM**

(30) Priority: 10.11.2022 CN 202211406889
(71) Applicant: Beijing Zitiao Network Technology Co., Ltd., Beijing 100190 (CN)
(72) Inventor: WANG, Xiao, Beijing 100028 (CN); XU, Yaxi, Beijing 100028 (CN)
(74) Representative: Grünecker Patent- und Rechtsanwälte PartG mbB
(86) International application number: PCT/CN2023/131116
(87) International publication number: WO 2024/099452

(57) **Abstract**

According to embodiments of the disclosure, a method, apparatus, device and computer-readable storage media for video interaction are provided. The method includes: providing a playing interface for playing a target video, the playing interface comprising a private domain interaction portal configured to support interaction in response to receiving a predetermined operation for the private domain interaction portal, presenting at least one interaction channel, the at least one interaction channel comprising a target channel determined based on selection information of the target user. Therefore, the user may quickly and conveniently locate the private domain interaction channel with the interested viewer group, improving the interaction efficiency and enhancing the user experience.

## Description

This application claims priority to Chinese patent application No. 202211406889.4, filed on November 10, 2022 and entitled 'METHOD, APPARATUS, DEVICE AND STORAGE MEDIUM FOR VIDEO INTERACTION', which is incorporated herein by reference in its entirety.

### FIELD

Example embodiments of the present disclosure generally relate to the field of computers, and in particular, to a method, apparatus, device and computer-readable storage media for video interaction.

### BACKGROUND

With the development of the Internet, people increasingly use the Internet to share and browse various contents. For example, people may use video platforms to share created video content or live stream platforms to provide live stream video. Chat or comment areas are also provided to support viewer interaction while watching videos.

### SUMMARY

In a first aspect of the present disclosure, a method for video interaction is provided. The method includes: providing a playing interface for playing a target video, the playing interface comprising a private domain interaction portal configured to support interaction between a target user and at least part of current viewers of the target video. The method further includes: in response to receiving a predetermined operation for the private domain interaction portal, presenting at least one interaction channel, the at least one interaction channel comprising a target channel determined based on selection information of the target user.

In a second aspect of the present disclosure, an apparatus for video interaction is provided. The apparatus includes: an interface providing module configured to provide a playing interface for playing a target video, the playing interface comprising a private domain interaction portal configured to support interaction between a target user and at least part of current viewers of the target video; and a channel presenting module configured to, in response to receiving a predetermined operation for the private domain interaction portal, present at least one interaction channel, the at least one interaction channel comprising a target channel determined based on selection information of the target user.

In a third aspect of the present disclosure, an electronic device is provided. The apparatus includes at least one processing unit; and at least one memory coupled to the at least one processing unit and storing instructions for execution by the at least one processing unit, the instructions, when performed by the at least one processing unit, causing the apparatus to perform the method of the first aspect.

In a fourth aspect of the present disclosure, a computer-readable storage medium is provided. The medium has a computer program stored thereon, the program, when performed by a processor, implementing the method of the first aspect.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates an example video interaction interface according to a conventional approach;
FIG. 2A to FIG. 2E are schematic diagrams of interfaces for video interaction according to some embodiments of the present disclosure;
FIG. 3 illustrates a flowchart of an example process of video interaction according to some embodiments of the present disclosure;
FIG. 4 illustrates a block diagram of an apparatus for video interaction according to some embodiments of the present disclosure; and
FIG. 5 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein. Rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms 'including', and the like should be understood to include 'including but not limited to'. The term 'based on' should be understood as 'based at least in part on'. The terms 'one embodiment' or 'the embodiment' should be understood as 'at least one embodiment'. The term 'some embodiments' should be understood as 'at least some embodiments'. Other explicit and implicit definitions may also be included below.

Herein, unless explicitly stated, 'in response to A' performs one step and does not imply that this step is performed immediately after 'A' but may include one or more intermediate steps.

It may be understood that the data involved in the technical solution (including but not limited to the data itself, the obtaining or use of the data) should follow the requirements of the corresponding laws and regulations and related regulations.

It may be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select 'agree' or 'disagree' to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

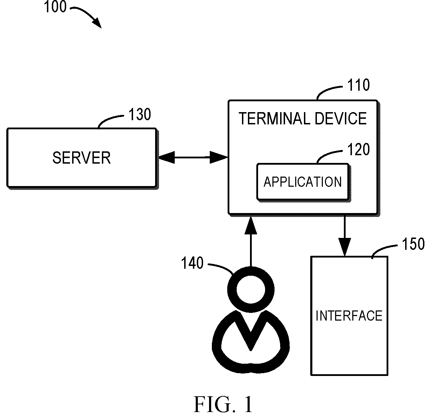

FIG. 1 illustrates a schematic diagram of an example environment 100 in which embodiments of the present disclosure may be implemented. In this example environment 100, an application 120 is installed in the terminal device 110. A user 140 may interact with the application 120 via the terminal device 110 and/or an attachment device of the terminal device 110. The application 120 may be a video application, such as a video sharing application or a live stream video application. The application 120 may provide the user 140 with at least one or more services related to the video content.

In the environment 100 of FIG. 1, when opening the application 120, the terminal device 110 may present a page 150 of the application 120. The page 150 may include various pages that may be provided by the application 120, such as a personal homepage, details page of video content, content creating page, content posting page, message page, and so forth. The application 120 may provide content creation functions, including shooting, uploading, editing, and/or posting a media content including a video content.

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface of a user (such as a 'wearable' circuit, etc. ). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

When watching a video, a chat or comment area is also provided for supporting viewers interaction. Many current applications or websites often support a public chat area for viewers in the current video playing interface, wherein the chat content is visible to all viewers, and in the case of live stream scenarios, to the live streamer as well. However, sometimes users may not expect to interact with all users of the video, but rather with a particular user or group. Currently, such interaction channels are lacking.

Embodiments of the present disclosure provide a solution for video interaction. According to the scheme, a private domain interaction portal is provided in the playing interface of the video for supporting interaction with at least part of viewers of the current video. In response to receiving a predetermined operation for the private domain interaction portal, at least one interaction channel is presented. The presented interaction channel includes at least an interaction channel determined based on selection information of the target user. On the basis of the manner, the private domain interaction between the user and at least part of the viewers may be supported, the interaction selection of the user is enriched. The user may quickly and conveniently locate the private domain interaction channel with the interested viewer group, improving the interaction efficiency and enhancing the user experience.

Various example implementations of this scheme are described in detail below in conjunction with the accompanying drawings.

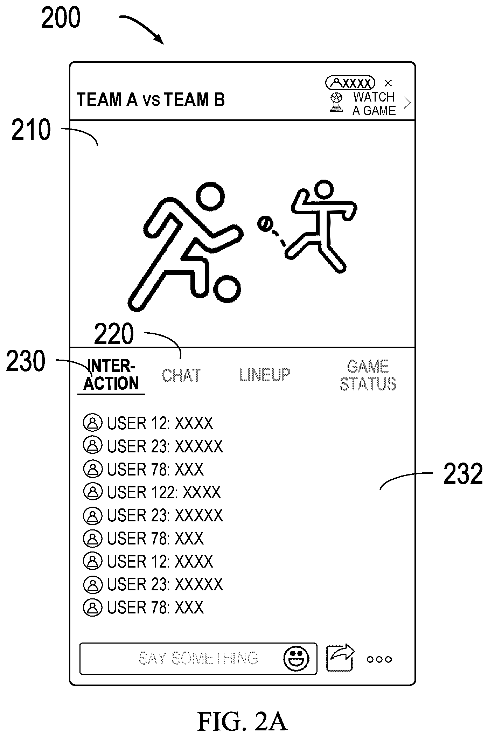

Reference is first made to FIG. 2A to FIG. 2E, which schematically illustrate a schematic diagram of an interface of video interaction according to some embodiments of the present disclosure. For purposes of discussion, it is assumed that the interfaces in FIGS. 2A-2E are presented by the terminal device 110 of FIG. 1. These interfaces may be interfaces provided by the application 120 running on the terminal device 110. In other embodiments, these interfaces may also be interfaces provided by a website. This is not limited in the embodiments of the present disclosure.

It should be understood that the interfaces in FIGS. 2A-2E are merely examples, and various interface designs may actually exist. Respective graphical elements in the interface may have different arrangements and different visual representations, wherein one or more of which may be omitted or replaced, and one or more other elements may also be present. Embodiments of the present disclosure are not limited in this respect.

As shown in FIG. 2A, the terminal device 110 provides a playing interface 200 for playing a target video 210. The playing interface 200 may include an area for displaying the target video 210. In some embodiments, the playing interface 200 may further include areas for other information associated with the target video, including interaction areas. In an embodiment of the present disclosure, the playing interface 200 further includes a private domain interaction portal 230 configured to support interaction between the target user and at least part of current viewers of the target video. Herein, 'target user' refers to a current user viewing a target video using an application or website, for example, may be a login user of an application or a website.

The playing interface 200 includes an interaction portal for supporting interaction between a target user and a viewer of the target video. The interaction portal includes at least a private interaction portal 220 configured to support interaction between a target user and at least part of current viewers of the target video 210. In some embodiments, the interaction portal may also include a public domain interaction portal 230 configured to support interaction between the target user and all of current viewers of the target video 210. In some extreme cases, all of current viewers may have the same choice and are added to a target channel corresponding to the selection. In this case, all of the users may interact in the public domain interaction portal 230 and may also interact in the target channel. When there is a new user, if the user does not have the same choice, it will only be allowed to interact in the public domain interaction portal 230 without being added to the target channel.

In some embodiments, the private domain interaction portal 220 and/or the public domain interaction portal 230 may be provided in a form of navigation label. In some embodiments, the private domain interaction portal 220 and/or the public domain interaction portal 230 may always be presented in the playing interface 200, or may be hidden or stowed in some manner, and presented when triggered by a user.

In some embodiments, when the playing interface 200 is triggered to be presented, the public domain interaction portal 230 may be triggered by default, thereby presenting a public domain interaction area 232 corresponding to the public domain interaction portal 230. The interaction information posted by the viewers of the target video 210 in the public domain interaction portal is presented in the public domain interaction area 232.

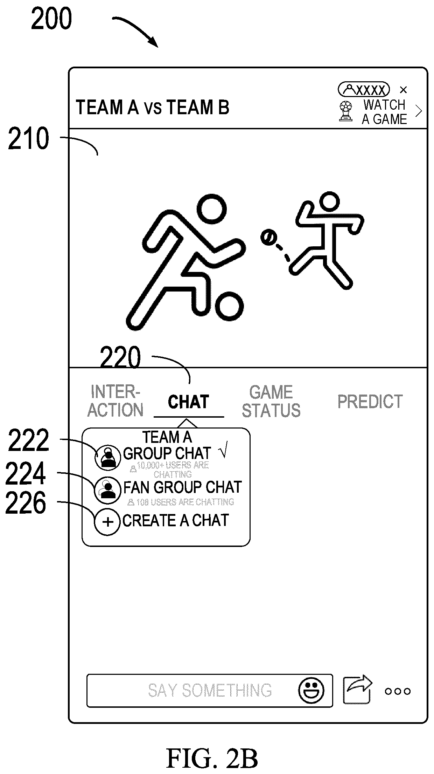

In some cases, the private domain interaction portal 220 may be triggered when the user desires to interact with a particular viewer or viewer group. In response to receiving a predetermined operation for the private domain interaction portal 220, the terminal device 110 presents at least one interaction channel. As shown in FIG. 2B, in the example, the predetermined operation on the private domain interaction portal 220 triggers a presentation of an interaction channel 222 and an interaction channel 224. The predetermined operation for triggering the private interaction portal may include one or more operations, such as a click operation, a predetermined gesture operation (e.g., a swipe gesture), a speech instruction, and/or any other used operation.

The interaction channel presented in the private interaction portal 220 may support private domain interaction between a target user and a particular viewer or viewer group within the interaction channel. For example, in the example of FIG. 2B, the interaction channel presented in the private domain interaction portal 220 includes interaction channels 222 and 224. In an embodiment of the present disclosure, one or more interaction channels presented in the private domain interaction portal may also be determined based on selection information of the target user. For the currently played target video 210, a plurality of predetermined channels corresponding to theme of the target video may be predetermined.

Such a theme may, for example, be associated with a content of the video. Taking the live stream video content as an example, such a theme may correspond to a title of the live stream video content and/or further text description, for example. Taking an episode video as an example, such a subject may correspond to, for example, a name of an episode and/or further textual descriptions.

Based on selection information of different users, the target channel matched with the selection information of the current target user may be selected from the plurality of predetermined channels for presentation in the private domain interaction portal thereof. In this way, the target user may more quickly select and enter into his/her favorite private domain for interaction.

For example, if a video content of the target video is related to a competitive activity, the plurality of predetermined channels may correspond to a plurality of participants of the competitive activity. For example, the plurality of participants of the competitive activity may be determined based on a theme of the video content. Taking a live stream video as an example, if it is a live stream for an event 'Team A vs Team B,' then it may be determined that its participant includes 'Team A' and 'Team B'.

The plurality of participants may include at least one of the following: a competitive team associated with the competitive activity, a competitive player associated with the competitive activity, a virtual character associated with the competitive activity, and/or the like. The competitive activity may be any offline or online competitive activity, such as a sporting event, a gaming event, a talent show, or the like. In the example of FIG. 2B, assuming that the target video 210 is a soccer game (e.g., a game between Team A and Team B), the plurality of participants may include both teams of the game, such as Team A and Team B. The plurality of participants may also additionally or alternatively include one or more players in the game, referees, coaches, mascots, and the like. The bidding activity and its participants can be configured here based on the needs of the actual scenario.

When watching videos related to different competitive activities, the target user may have a certain choice for the plurality of participants. Therefore, selection information of the target user may indicate a selection of the target user for a target participant of the plurality of participants, and a target channel corresponds to the target participant. Considering the scenario of FIG. 2B, the target user may be more supportive of or prefer Team A to Team B in the current match. Therefore, when a predetermined operation for the private domain interaction portal 220 is received, at least the interaction channel 222 'Team A Group Chat' is presented as the target channel. In the interaction channel 222, the target user may interact with all of the viewers supporting the Team A, such that the viewer may be part or all of viewers. It should be understood that, when the target video is a live stream video in a live stream room, such viewers may further include a live stream party (for example, an anchor) of the current live stream room.

In some embodiments, the target channel may be directly determined based on the selection information of the target user. For example, if the selection information of the target user indicates that the target user supports the 'A queue' in the competitive activity, when a predetermined operation for the private domain interaction portal 220 is received, at least the interaction channel 222 'Team Group Chat' is presented as the target channel, regardless of whether the currently played video is associated with the 'Team A'. For example, it may correspond to a live stream of a game that is not 'Team A'.

The selection information used to determine the target channel may be obtained from various channels. In some embodiments, prior to the start of the competitive activity or during the playing of the target video, the user may be allowed to express information about his or her choices, such as which of the plurality of participants to support more, by means of surveys, prizes, cheering for one's team, and the like. In some embodiments, the choice made by the user in a similar video or similar competitive activity may also be determined by other auxiliary information to infer a possible choice in the current target video or competitive activity. Embodiments of the present disclosure are not limited in this regard.

In some embodiments, one or more target channels may be determined based on the selection information of the target user. For example, one target channel may correspond to a competitive team selected by the target user out of the plurality of competitive teams in the competitive activity, a further target channel may correspond to a competitive player selected by the target user out of the plurality of competitive players participating in the competitive activity, and so on.

In some embodiments, the channel corresponding to the plurality of participants may be created, for example, by an operator or an operate user of the target video. In some embodiments, viewers watching the target video may also be allowed to freely create private channels as needed. Therefore, in addition to the channel presented based on the selection information of the target user, at least one private channel added by the target user may be presented in the private domain interaction portal, and the at least one private channel may be created based on a creation application of the corresponding user. As shown in FIG. 2B, the interaction channel 224 'Team Group Chat' may be created by the current target user application, or created by a further user and the current target user has joined the private channel.

In some embodiments, the terminal device 110 may also present channel description information of the at least one interaction channel while presenting the interaction channel in the private domain interaction portal. The channel description information of the interaction channel may indicate a channel identification of the interaction channel, a number of participating users of the interaction channel, and/or any other suitable information. As shown in FIG. 2B, at least a channel identification 'A Team Group Chat' of the interaction channel 222 and the number of participating users '10,000 +' are presented. Similar description information may also be presented for the interaction channel 224.

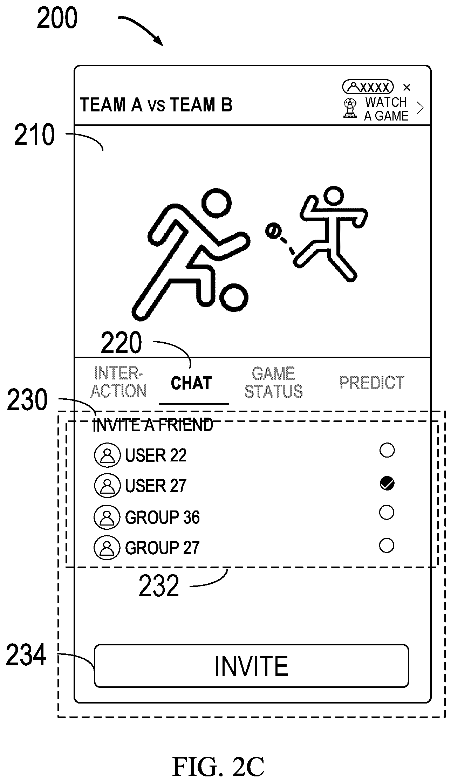

In some embodiments, after the private domain interaction portal is triggered, the terminal device 110 may present a channel creation portal for creating a private channel. For example, in the example of FIG. 2B, after receiving the predetermined operation on the private domain interaction portal 220, in addition to the currently available interaction channels 222 and 224, the terminal device 110 may further provide a channel creation portal 226 to create other private channels for interaction by the target user. In response to a selection for the channel creation portal (e.g., if the user clicks on the channel creation portal), the terminal device 110 may be configured to present a creation interface corresponding to a target private channel to be created, the creation interface being configured to invite or add at least one contact or contact group. FIG. 2C illustrates an example creation interface 230. In some embodiments, the creation interface 230 may include a list 232 of contacts or contact groups that the target user may invite or add, each contact group may include a plurality of contacts. The target user may freely select a contact or contact group in the list 232 to invite or add to the target private channel to be created.

In some embodiments, after receiving, in the creation interface, a first input indicating at least one contact or contact group, the terminal device 110 may send a reminder to the at least one contact or contact group selected by the target user for joining to the target private channel. For example, in FIG. 2C, an invitation control 234 may be provided in the creation interface 230. After the target user clicks to select one or more contacts and/or contact groups to be added, if it is detected that the target user triggers the invitation control 234, a reminder may be sent to the corresponding contact and/or the contact group. In some embodiments, the reminder may be sent, for example, by way of an in-app or in-web message, reminder, or chat message between the users. In some embodiments, the reminder may include a portal of the created target private channel. In this way, the reminded contact and/or the user in the contact group may directly enter the target private channel through the portal for interaction.

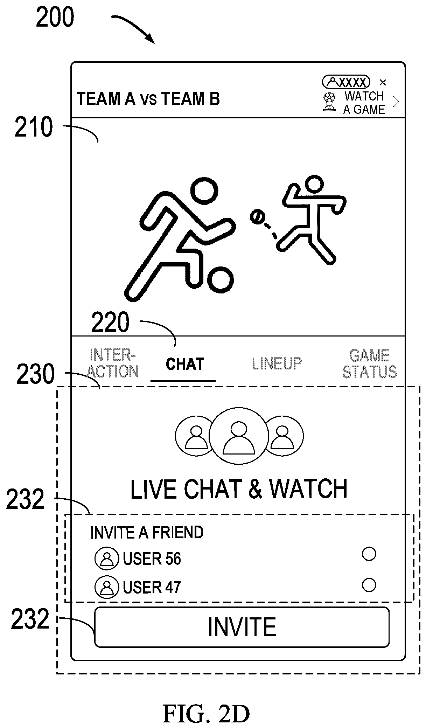

In some embodiments, upon receiving a predetermined operation on the private domain interaction portal 220, if the selection information of the target user cannot be determined or the target channel cannot be determined based on the selection information, and the target user has not previously created or joined any private channel, the terminal device 110 may also present a creation interface to remind the target user that he or she may proactively create a private channel for interaction. For example, the creation interface 230 may be provided as shown in FIG. 2D, which may include a list 232 of contacts or contact groups and an invitation control 234.

In some embodiments, if the target user creates a target private channel, the target user may be allowed to share the created target private channel to other users, thereby inviting more relevant users to join the view and interaction of the target video. Specifically, the terminal device 110 may receive a second input for generating a sharing link of the target private channel. In response to the second input, the sharing link may be caused to be copied to a clipboard associated with the target user. In this way, the target user may conveniently paste the sharing link from a clipboard to any other input-enabled location, such as a third-party application or website, an appropriate input block, a document, for posting to a user, and so on. By sharing the link, a further user, including users of the third-party application or website, are able to easily join the target private channel created by the target user for interaction.

By proactively creating a target private channel, the target user may autonomously create a private interaction group for deeper interaction with respect to the played target video.

In some embodiments, the target private channel may follow a restrictions in one or more aspects, such as a cap on the number of people on the channel, join verification for joining the channel, and so on. These settings may be default (e.g., there is a default maximum number of people) or may be set autonomously by the target user as needed (e.g., whether or not join verification is required). In some embodiments, the target user or other authorized users within the target private channel may also make various settings with respect to the lifecycle of the target private channel, user access, and the like. Embodiments of the present disclosure are not limited in this regard.

In some embodiments, for an interaction channel in a private domain interaction portal, including a channel determined based on the selection information of the target user, a private channel joined and/or created by the target user, the target user may be allowed to switch freely. That is, the target user may switch from one interaction channel to another. In some embodiments, the terminal device 110 may receive a selection of a particular channel (referred to as a 'first channel') in one or more interaction channels in a private domain interaction portal. In response to the selection, the terminal device 110 may present, in the playing interface, an interaction window corresponding to the first channel.

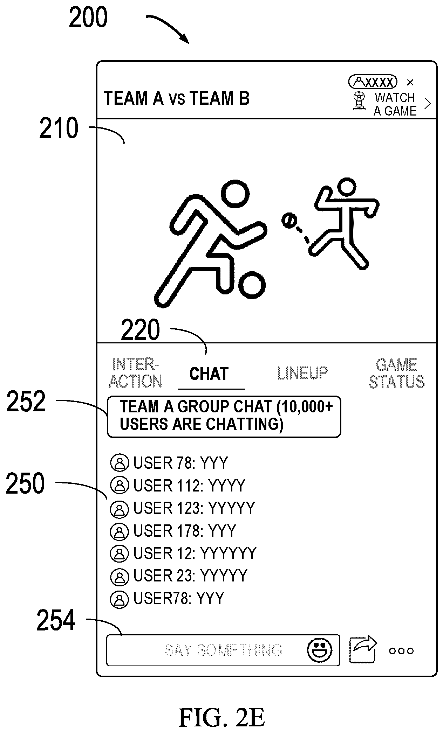

For example, if the target user selects the interaction channel 222 in FIG. 2B, an interaction window 250 shown in FIG. 2E may be presented. In some embodiments, the interaction window corresponding to the first channel may be configured to present a first interactive content from a set of viewers corresponding to the first channel. Alternatively or in addition, the interaction window may be further configured to receive a second interactive content from the target user for sending to the set of viewers. For example, the interaction window 250 of FIG. 2E further provides an input block 254, configured to receive an interaction comment input by the target user, and present the interaction comment of the target user in the interaction window. In some embodiments, the interaction window may further present channel description information 252 of the current channel (that is, the first channel), for example, a channel identification, the number of participating users, and the like.

In some embodiments, an interaction channel within the private domain interaction portal may support various types of interactive content. In some embodiments, the interactive content may include but is not limited to: a text interactive content, an image interactive content, a sticker interactive content, a speech interactive content, and the like. Specific interaction manners of different types of interactive contents may be configured based on the actual application and requirements of the actual scenario.

In some embodiments, one or more interaction channels (e.g., the first channel that a target user selects to enter) within a private domain interaction portal may also support real-time speech interaction capabilities. The real-time speech interaction capability may be configured as needed or may be turned on and off by the creator and/or administrator of the channel. In the case of having real-time speech interaction capabilities, at least one user in the interaction channel may be configured to have access to real-time speech input. The user with the access to real-time speech input may perform a real-time speech input in the current interaction channel, and the inputted speech is played to other users within the channel.

In some embodiments, one or more users within an interaction channel may request such access to real-time speech input. A creator or one or more further authorized users (e.g., an administrator) within the interaction channel may confirm whether a certain user is authorized to have access to real-time speech input. For example, assuming that a target user of the terminal device 110 has such authorization, when the terminal device 110 receives a request in the current channel (which is still the 'first channel') from a first user, the terminal device 110 may remind the target user whether to acknowledge the request. In response to an acknowledgement for the request, the terminal device 110 may configure the requesting first user to have access to real-time speech input. In some embodiments, a particular user within the first channel, such as a creator and/or administrator, may proactively request real-time speech input from one or more group users within the channel. The real-time speech input may be performed with confirmation from the invited user(s). In some embodiments, two or more users within the channel may also be supported to have access to real-time speech input at the same time, enabling these users to perform real-time speech interaction. In some embodiments, if the target user participates in a plurality of private channels, it may be set up to only allow the target user to perform real-time speech input in a single private channel at a time.

By configuring the real-time speech input in the private channel, richer interaction manners of the user may be supported.

In some embodiments, if the first channel supports real-time speech input by the user, the volume of the target video and the volume of the real-time speech content in the current channel may also be supported. Specifically, a configuration interface of the first channel may be provided, and the configuration interface includes at least a volume adjustment control. The volume adjustment control may be configured to adjust a first volume of the target video and a second volume of a real-time speech content in the first channel. In this way, different users may determine how to adjust the volume of the currently different sound source based on actual needs.

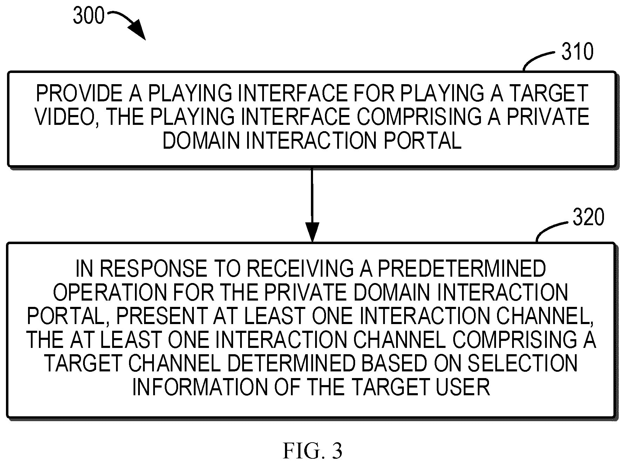

FIG. 3 illustrates a flowchart of an example process 300 for video interaction, in accordance with some embodiments of the present disclosure. In some embodiments, the process 300 may be implemented by the terminal device 110.

As shown in FIG. 3, at block 310, the terminal device 110 provides a playing interface for playing a target video, the playing interface comprising a private domain interaction portal configured to support interaction between a target user and at least part of current viewers of the target video.

At block 320, the terminal device 110, in response to receiving a predetermined operation for the private domain interaction portal, presents at least one interaction channel, the at least one interaction channel comprising a target channel determined based on selection information of the target user.

In some embodiments, the target channel is determined from a plurality of predetermined channels corresponding to a topic of the target video.

In some embodiments, a video content of the target video is related to a competitive activity, the plurality of predetermined channels corresponding to a plurality of participants of the competitive activity.

In some embodiments, the plurality of participants comprise at least one of the following: a competitive team associated with the competitive activity; a competitive player associated with the competitive activity; or a virtual character associated with the competitive activity.

In some embodiments, the selection information indicates a selection of a target participant of the plurality of participants by the target user, and the target channel corresponds to the target participant.

In some embodiments, the at least one interaction channel further comprises at least one private channel added by the target user, the at least one private channel being created based on a creation application of a respective user.

In some embodiments, the process 300 further includes: presenting a channel creation portal; and in response to a selection for the channel creation portal, presenting a creation interface corresponding to a target private channel to be created, the creation interface being configured to invite or add at least one contact or contact group.

In some embodiments, the process 300 further includes: receiving, in the creation interface, a first input indicating at least one contact or contact group; and sending a reminder to the at least one contact or contact group for joining to the target private channel.

In some embodiments, the process 300 further includes: receiving a second input for generating a sharing link of the target private channel; and causing the sharing link to be copied to a clipboard associated with the target user.

In some embodiments, the process 300 further includes: receiving a selection for a first channel of the at least one interaction channel; and presenting, in the playing interface, an interaction window corresponding to the first channel, the interaction window being configured to: present a first interactive content from a set of viewers corresponding to the first channel; and/or receive a second interactive content from the target user for sending to the set of viewers.

In some embodiments, the first interactive content and/or the second interactive content comprise at least one of the following: a text interactive content; an image interactive content; a sticker interactive content; or a speech interactive content.

In some embodiments, at least one user of the first channel is configured to have access to real-time speech input.

In some embodiments, the process 300 further includes: receiving a request in the first channel from a first user; and in response to an acknowledgement for the request, configuring the first user to have access to real-time speech input.

In some embodiments, the process 300 further includes: providing a configuration interface of the first channel, the configuration interface comprising a volume adjustment control, the volume adjustment control being configured to adjust a first volume of the target video and a second volume of a real-time speech content in the first channel.

In some embodiments, the process 300 further includes: presenting channel description information of the at least one interaction channel, the channel description information at least indicating: a channel identification of the at least one interaction channel and/or a number of participating users of the at least one interaction channel.

In some embodiments, the playing interface further comprises a public domain interaction portal configured to support interaction between the target user and all of current viewers of the target video.

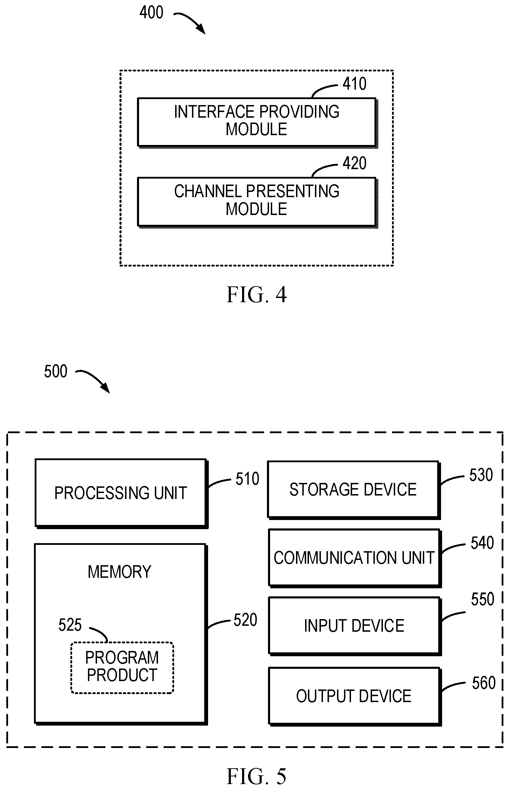

Embodiments of the present disclosure also provide a corresponding apparatus for implementing the above method or process. FIG. 4 illustrates a schematic structural block diagram of an apparatus 400 for video interaction according to some embodiments of the present disclosure. The apparatus 400 may be implemented or included in the terminal device 110.

As shown in FIG. 4, the apparatus 400 includes: an interface providing module 410 configured to provide a playing interface for playing a target video, the playing interface comprising a private domain interaction portal configured to support interaction between a target user and at least part of current viewers of the target video. The apparatus 400 further includes: a channel presenting module 420 configured to, in response to receiving a predetermined operation for the private domain interaction portal, present at least one interaction channel, the at least one interaction channel comprising a target channel determined based on selection information of the target user.

In some embodiments, the target channel is determined from a plurality of predetermined channels corresponding to a topic of the target video.

In some embodiments, a video content of the target video is related to a competitive activity, the plurality of predetermined channels corresponding to a plurality of participants of the competitive activity.

In some embodiments, the plurality of participants comprise at least one of the following: a competitive team associated with the competitive activity; a competitive player associated with the competitive activity; or a virtual character associated with the competitive activity.

In some embodiments, the selection information indicates a selection of a target participant of the plurality of participants by the target user, and the target channel corresponds to the target participant.

In some embodiments, the at least one interaction channel further comprises at least one private channel added by the target user, the at least one private channel being created based on a creation application of a respective user.

In some embodiments, the apparatus 400 further includes: a creation portal presenting module configured to present a channel creation portal; and a creation interface presenting module configured to, in response to a selection for the channel creation portal, present a creation interface corresponding to a target private channel to be created, the creation interface being configured to invite or add at least one contact or contact group.

In some embodiments, the apparatus 400 further includes: a first input receiving module configured to receive, in the creation interface, a first input indicating at least one contact or contact group; and a reminder sending module configured to send a reminder to the at least one contact or contact group for joining to the target private channel.

In some embodiments, the apparatus 400 further includes: a second input receiving module configured to receive a second input for generating a sharing link of the target private channel; and a copying module configured to cause the sharing link to be copied to a clipboard associated with the target user.

In some embodiments, the apparatus 400 further includes: a channel receiving module configured to receive a selection for a first channel of the at least one interaction channel; and a window presenting module configured to present, in the playing interface, an interaction window corresponding to the first channel, the interaction window being configured to: present a first interactive content from a set of viewers corresponding to the first channel; and/or receive a second interactive content from the target user for sending to the set of viewers.

In some embodiments, the first interactive content and/or the second interactive content comprise at least one of the following: a text interactive content; an image interactive content; a sticker interactive content; or a speech interactive content.

In some embodiments, at least one user of the first channel is configured to have access to real-time speech input.

In some embodiments, the apparatus 400 further includes: a request receiving module configured to receive a request in the first channel from a first user; and an access configuration module configured to, in response to an acknowledgement for the request, configure the first user to have access to real-time speech input.

In some embodiments, the apparatus 400 further includes: a configuration providing module configured to provide a configuration interface of the first channel, the configuration interface comprising a volume adjustment control, the volume adjustment control being configured to adjust a first volume of the target video and a second volume of a real-time speech content in the first channel.

In some embodiments, the apparatus 400 further includes: a description presenting module configured to present channel description information of the at least one interaction channel, the channel description information at least indicating: a channel identification of the at least one interaction channel and/or a number of participating users of the at least one interaction channel.

In some embodiments, the playing interface further comprises a public domain interaction portal configured to support interaction between the target user and all of current viewers of the target video.

The units included in the apparatus 400 may be implemented using a variety of manners, including software, hardware, firmware, or any combination thereof. In some embodiments, one or more of the units may be implemented using software and/or firmware, such as machine-executable instructions stored on a storage medium. In addition to or in lieu of machine-executable instructions, some or all of the units in the apparatus 400 may be implemented, at least in part, by one or more hardware logic components. As an example and not a limitation, example types of hardware logic components that may be used include field-programmable gate arrays (FPGAs), application-specific integrated circuits (ASICs), application-specific standard products (ASSPs), systems-on-chip (SOCs), complex programmable logic devices (CPLDs), and the like.

FIG. 5 illustrates a block diagram of an electronic device 500 in which one or more embodiments of the present disclosure may be implemented. It should be understood that the electronic device 500 illustrated in FIG. 5 is merely for example and should not constitute any limitation on the functionality and scope of the embodiments described herein. The electronic device 500 shown in FIG. 5 may be configured to implement the terminal device 110 in FIG. 1.

As shown in FIG. 5, the electronic device 500 is in a form of a general-purpose electronic device. Components of the electronic device 500 may include, but are not limited to, one or more processors or processing units 510, memory 520, storage device 530, one or more communication units 540, one or more input devices 550, and one or more output devices 560. The processing units 510 may be actual or virtual processors and are capable of performing various processes based on programs stored in the memory 520. In a multiprocessor system, a plurality of processing units perform computer-executable instructions in parallel to increase the parallel processing power of the electronic device 500.

The electronic device 500 typically includes a plurality of computer storage media. Such media may be any obtainable media accessible to the electronic device 500, including, but not limited to, volatile and non-volatile media, removable and non-removable media. The memory 520 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 530 may be a removable or non-removable medium and may include a machine-readable medium, such as a flash drive, a disk, or any other medium that may be capable of being used to store information and/or data (e.g., training data for training) and may be accessible within the electronic device 500.

The electronic device 500 may further include additional removable/non-removable, volatile/non-volatile storage media. Although not shown in FIG. 5, a disk drive for reading from or writing to a removable, non-volatile disk (e.g., a 'floppy disk') and an optical disk drive for reading from or writing to a removable, non-volatile optical disk may be provided. In these embodiments, each drive may be connected to a bus (not shown) by one or more data media interfaces. The memory 520 may include a computer program product 525 having one or more program modules that are configured to perform various methods or actions of various embodiments of the present disclosure.

The communication unit 540 implements communication with other electronic devices via a communication medium. Additionally, the functions of the components of the electronic device 500 may be implemented as a single computing cluster or a plurality of computing machines that are capable of communicating over a communication connection. Thus, the electronic device 500 may use logical connections to one or more other servers, networked personal computers (PCs), or another network node to operate in a networked environment.

The input device 550 may be one or more input devices, such as a mouse, a keyboard, a tracking ball, and the like. The output device 560 may be one or more output devices, such as a monitor, a speaker, a printer, and the like. The electronic device 500 may also communicate, as desired, via the communication unit 540, with one or more external devices (not shown), external devices such as storage devices, display devices, etc., with one or more devices that enable a user to interact with the electronic device 500, or with any device that enables the electronic device 500 to communicate with one or more other electronic devices (e.g., a network card, modem, etc.) to communicate. Such communication may be performed via an input/output (I/O) interface (not shown).

According to example implementations of the present disclosure, a computer-readable storage medium having a computer program stored thereon is provided, the program, when performed by a processor, implementing the method described above. According to example implementations of the present disclosure, a computer program product is also provided, the computer program product being tangibly stored on a non-transitory computer-readable medium and including computer-executable instructions, and the computer-executable instructions being performed by a processor to implement the methods described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for video interaction, comprising:
providing a playing interface for playing a target video, the playing interface comprising a private domain interaction portal configured to support interaction between a target user and at least part of current viewers of the target video; and
in response to receiving a predetermined operation for the private domain interaction portal, presenting at least one interaction channel, the at least one interaction channel comprising a target channel determined based on selection information of the target user.

2. The method of claim 1, wherein the target channel is determined from a plurality of predetermined channels corresponding to a topic of the target video.

3. The method of claim 2, wherein a video content of the target video is related to a competitive activity, the plurality of predetermined channels corresponding to a plurality of participants of the competitive activity.

4. The method of claim 3, wherein the plurality of participants comprise at least one of the following:
a competitive team associated with the competitive activity;
a competitive player associated with the competitive activity; or
a virtual character associated with the competitive activity.

5. The method of claim 3, wherein the selection information indicates a selection of a target participant of the plurality of participants by the target user, and the target channel corresponds to the target participant.

6. The method of claim 1, wherein the at least one interaction channel further comprises at least one private channel added by the target user, the at least one private channel being created based on a creation application of a respective user.

7. The method of claim 1, further comprising:
presenting a channel creation portal; and
in response to a selection for the channel creation portal, presenting a creation interface corresponding to a target private channel to be created, the creation interface being configured to invite or add at least one contact or contact group.

8. The method of claim 7, further comprising:
receiving, in the creation interface, a first input indicating at least one contact or contact group; and sending a reminder to the at least one contact or contact group for joining to the target private channel.

9. The method of claim 7, further comprising:
receiving a second input for generating a sharing link of the target private channel; and causing the sharing link to be copied to a clipboard associated with the target user.

10. The method of claim 1, further comprising:
receiving a selection for a first channel of the at least one interaction channel; and
presenting, in the playing interface, an interaction window corresponding to the first channel, the interaction window being configured to:
present a first interactive content from a set of viewers corresponding to the first channel; and/or
receive a second interactive content from the target user for sending to the set of viewers.

11. The method of claim 10, wherein the first interactive content and/or the second interactive content comprise at least one of the following:
a text interactive content;
an image interactive content;
a sticker interactive content; or
a speech interactive content.

12. The method of claim 10, wherein at least one user of the first channel is configured to have access to real-time speech input.

13. The method of claim 12, further comprising:
receiving a request in the first channel from a first user; and
in response to an acknowledgement for the request, configuring the first user to have access to real-time speech input.

14. the method of claim 12, further comprising:
providing a configuration interface of the first channel, the configuration interface comprising a volume adjustment control, the volume adjustment control being configured to adjust a first volume of the target video and a second volume of a real-time speech content in the first channel.

15. The method of claim 1, further comprising:
presenting channel description information of the at least one interaction channel, the channel description information at least indicating: a channel identification of the at least one interaction channel and/or a number of participating users of the at least one interaction channel.

16. The method of claim 1, wherein the playing interface further comprises a public domain interaction portal configured to support interaction between the target user and all of current viewers of the target video.

17. An apparatus for video interaction, comprising:
an interface providing module configured to provide a playing interface for playing a target video, the playing interface comprising a private domain interaction portal configured to support interaction between a target user and at least part of current viewers of the target video; and
a channel presenting module configured to, in response to receiving a predetermined operation for the private domain interaction portal, present at least one interaction channel, the at least one interaction channel comprising a target channel determined based on selection information of the target user.

18. An electronic device, comprising:
at least one processing unit; and
at least one memory coupled to the at least one processing unit and storing instructions for execution by the at least one processing unit, the instructions, when performed by the at least one processing unit, causing the apparatus to perform the method of any of claims 1 to 16.

19. A computer-readable storage medium having a computer program stored thereon, the program, when performed by a processor, implementing the method of any of claims 1 to 16.
